# EUROPÄISCHE PATENTSCHRIFT

(11) **EP 4 238 842 B1**
(45) Veröffentlichungstag und Bekanntmachung des Hinweises auf die Patenterteilung: **24.12.2025**
(21) Anmeldenummer: 23153363.9
(22) Anmeldetag: 26.01.2023
(51) Int. Cl.: B60W 30/14, B60W 40/02, B60W 10/04, B60W 10/18, B60W 10/20, B60T 8/32, B60W 50/06

(54) **VERFAHREN, STEUERGERÄT, COMPUTERPROGRAMMPRODUKT UND SPEICHERMEDIUM ZUM BETREIBEN EINES MOTORRADS**
METHOD, CONTROL DEVICE, COMPUTER PROGRAM PRODUCT AND STORAGE MEDIUM FOR OPERATING A MOTORCYCLE
PROCÉDÉ, APPAREIL DE COMMANDE, PROGRAMME D'ORDINATEUR ET DISPOSITIF DE STOCKAGE INFORMATIQUE POUR FAIRE FONCTIONNER UNE MOTOCYCLETTE

(30) Priorität: 03.03.2022 DE 102022202153
(43) Veröffentlichungstag der Anmeldung: 06.09.2023
(73) Patentinhaber: Robert Bosch GmbH, 70442 Stuttgart (DE)
(72) Erfinder: Hellmann, Felix, 1030 Wien (AT); Oshida, Yuki, Kanagawa 224-0021 (JP)

(56) Entgegenhaltungen:
- WO-A2-2019/241307
- DE-A1- 102018 129 823
- DE-A1- 102020 202 661
- US-A- 6 076 036

## Beschreibung

### Gebiet der Erfindung

Die Erfindung betrifft ein Verfahren zum Betreiben eines Motorrads, ein entsprechendes Steuergerät sowie ein entsprechendes Computerprogrammprodukt.

### Stand der Technik

Ein Motorrad kann einen Tempomat aufweisen. Der Tempomat regelt eine Drehmomentanforderung an einen Antrieb des Motorrads, um eine Geschwindigkeit des Motorrads innerhalb eines Toleranzbereichs um eine Sollgeschwindigkeit zu halten. Ein Fahrer des Motorrads kann dann einen Gasgriff des Motorrads nur locker halten und sich auf das Lenken des Motorrads konzentrieren.

Das Motorrad kann aufgrund seiner geringen Masse schnell auf Änderungen von äußeren Einflüssen reagieren. Insbesondere kann sich die Geschwindigkeit durch die Änderung der äußeren Einflüsse schnell ändern.

Der Tempomat regelt die Drehmomentanforderung nach, wenn sich die Geschwindigkeit so ändert, dass sie den Toleranzbereich verlässt.

Wenn das Motorrad bei böigen Windverhältnissen mit aktiviertem Tempomat gefahren wird, kann der Tempomat auf eine für den Fahrer des Motorrads unangenehme Weise reagieren. Wenn das Motorrad beispielsweise kurz von einer Windböe von vorne erfasst wird, kann der Tempomat die Drehmomentanforderung erhöhen, obwohl die Böe bereits vorbei ist.

Dadurch kann sich die Geschwindigkeit nach der Böe über den Toleranzbereich erhöhen, weshalb der Tempomat die Drehmomentanforderung unmittelbar wieder absenken wird, um die Geschwindigkeit wieder innerhalb des Toleranzbereichs einzuregeln.

Da der Fahrer diese Geschwindigkeitsänderungen stark wahrnehmen kann, kann ein für den Fahrer unangenehmes Fahrgefühl entstehen.

Stand der Technik sind WO 2019/241307A1, US 6 076 036 A und DE 10 2020 202661 A1

### Offenbarung der Erfindung

Vor diesem Hintergrund werden mit dem hier vorgestellten Ansatz ein Verfahren zum Betreiben eines Motorrads, ein entsprechendes Steuergerät sowie ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Bei dem hier vorgestellten Ansatz werden aktuelle Windverhältnisse am Motorrad erkannt und ein Ansprechverhalten eines Tempomats des Motorrads auf die Windverhältnisse abgestimmt.

Durch den hier vorgestellten Ansatz kann ein Fahrgefühl für einen Fahrer des Motorrads verbessert werden, da unerwartete Geschwindigkeitsänderungen aufgrund der Windverhältnisse reduziert oder verhindert werden.

Es wird ein Verfahren zum Betreiben eines Motorrads vorgeschlagen, wobei zumindest ein Regelparameter eines Längsgeschwindigkeitsreglers des Motorrads in Abhängigkeit von aktuellen Windverhältnissen eingestellt wird.

Ideen zu Ausführungsformen der vorliegenden Erfindung können unter anderem als auf den nachfolgend beschriebenen Gedanken und Erkenntnissen beruhend angesehen werden.

Ein Längsgeschwindigkeitsregler kann als Tempomat bezeichnet werden oder Teil des Tempomats sein. Der Längsgeschwindigkeitsregler regelt zumindest eine Drehmomentanforderung an einen Antrieb des Motorrads, um eine Geschwindigkeit des Motorrads innerhalb eines Toleranzbereichs um eine vorbestimmte Sollgeschwindigkeit zu halten.

Der Längsgeschwindigkeitsregler kann ein PID-S-Regler sein. Der Längsgeschwindigkeitsregler kann die Drehmomentanforderung in Abhängigkeit von einer Abweichung zwischen der Geschwindigkeit und der Sollgeschwindigkeit einstellen.

Ein Regelparameter des Längsgeschwindigkeitsreglers kann ein Ansprechverhalten des Längsgeschwindigkeitsreglers auf die Abweichung beeinflussen. Der Längsgeschwindigkeitsregler kann mehrere Regelparameter aufweisen. Der Regelparameter kann beispielsweise einen Proportionalanteil, einen Integralanteil, einen Differenzialanteil oder einen Vorsteuerungsanteil des Längsgeschwindigkeitsreglers abbilden. Durch ein Anpassen des zumindest einen Regelparameters kann eine Reglerkonfiguration des Längsgeschwindigkeitsreglers während der Fahrt an aktuelle Windverhältnisse beziehungsweise eine aktuelle Windbedingung angepasst werden.

Windverhältnisse können beispielsweise ruhig oder böig sein. Bei ruhigen Windverhältnissen kann eine Wahrscheinlichkeit für schwache Windböen gering sein. Bei böigen Windverhältnissen kann die Wahrscheinlichkeit für starke Windböen groß sein. Die Windverhältnisse können beispielsweise unter Verwendung eines Windsensors des Motorrads erkannt werden. Eine Bewegungsinformation kann von unterschiedlichen Sensoren des Motorrads eingelesen werden. Die Geschwindigkeit kann direkt in der Bewegungsinformation enthalten sein oder aus einer in der Bewegungsinformation abgebildeten Beschleunigung des Motorrads abgeleitet werden. Eine Regelgröße kann beispielsweise die Drehmomentanforderung sein.

Die Bewegung des Motorrads kann auch durch andere äußere Einflüsse verändert werden. Beispielsweise kann das Motorrad durch Pfützen auf der Straße kurzzeitig abgebremst werden. Der hier vorgestellte Ansatz funktioniert auch bei unterschiedlichen Nässeverhältnissen auf der Straße. Wenn diese Bedingungen anhand der Bewegung des Motorrads erkannt werden, kann zumindest ein Regelparameter des Längsgeschwindigkeitsreglers verändert werden, um das Fahrgefühl zu verbessern.

Erfindungsgemäß werden die böigen Windverhältniss erkannt , wenn die Bewegungsinformation und die Regelgröße ein Schwingen des Längsgeschwindigkeitsreglers anzeigen. Die böigen Windverhältnisse können beispielsweise anhand einer Frequenz, eines Phasenversatzes und/oder einer Amplitude des Schwingens erkannt werden. Die böigen Windverhältnisse können erkannt werden, wenn das Schwingen größer als ein Toleranzbereich ist.

Die böigen Windverhältnisse können erkannt werden, wenn eine Schwingungsfrequenz des Schwingens in einen vorbestimmten Frequenzbereich ist. Der Frequenzbereich kann um eine Resonanzfrequenz des Längsgeschwindigkeitsreglers angeordnet sein. Die Resonanzfrequenz kann durch Versuche für unterschiedliche Motorradtypen erfasst werden. Die Resonanzfrequenz kann durch den zumindest einen Regelparameter beeinflusst werden. Durch eine Änderung des Regelparameters kann die Resonanzfrequenz in einen unkritischen Bereich verschoben werden.

Die Windverhältnisse können mit zumindest zwei hinterlegten Windmustern verglichen werden, um einen Typ der Windverhältnisse zu erkennen. Den hinterlegten Windmustern kann je ein Wert für den zumindest einen Regelparameter zugeordnet sein. Der Regelparameter kann entsprechend dem erkannten Typ eingestellt werden. Die Windmuster können beispielsweise die ruhigen Windverhältnisse und die böigen Windverhältnisse abbilden. Für den zumindest einen Regelparameter können für unterschiedliche Windverhältnisse unterschiedliche Werte hinterlegt sein. Durch das Ändern des zumindest einen Regelparameters kann ein Modus des Längsgeschwindigkeitsreglers geändert werden.

Ein Zwischentyp der Windverhältnisse kann erkannt werden, wenn die Windverhältnisse zwischen zwei hinterlegten Windmustern liegen. Der Wert für den zumindest einen Regelparameter kann zwischen den zu den Windmustern hinterlegten Werten interpoliert werden. Die ruhigen Windverhältnisse und die böigen Windverhältnisse können Extrembedingungen kennzeichnen. Die tatsächlichen Windverhältnisse können zwischen den Extrembedingungen liegen. Die zu den Windmustern hinterlegten Werte können eine Kennlinie definieren. Je nach Windverhältnissen können Zwischenwerte aus der Kennlinie ausgelesen werden. Die Werte können auch für jeden Regelparameter eine eigene Kennlinie definieren.

Ferner kann eine Kennlinie eines Lenkungsdämpfers des Motorrads in Abhängigkeit von den aktuellen Windverhältnissen eingestellt werden. Das Motorrad kann nicht nur in Längsrichtung ins Schwingen geraten. Das Motorrad kann auch in einer Querrichtung ins Schwingen geraten, wenn sich die Windverhältnisse ändern. Ein Lenkungsdämpfer kann einen Lenkgeschwindigkeitsabhängigen Widerstand gegen eine Lenkbewegung des Fahrers aufbringen. Durch eine Änderung der Einstellung des Lenkungsdämpfers kann das Schwingen in der Querrichtung reduziert oder unterbunden werden.

Weiterhin kann eine Kennlinie eines Gasgriffs des Motorrads in Abhängigkeit von den aktuellen Windverhältnissen eingestellt werden. Über einen Gasgriff kann eine Beschleunigungsanforderung des Fahrers erfasst werden. Der Gasgriff kann ein Drehgriff sein. Der Gasgriff kann auch bei einem elektrisch angetriebenen Motorrad vorhanden sein. Der Fahrer des Motorrads kann den Tempomat über den Gasgriff oder die Bremse jederzeit übersteuern. Das Schwingen des Motorrads kann verstärkt werden, wenn der Fahrer den Tempomat über den Gasgriff durch Gegenbewegungen übersteuert. Durch eine veränderte Kennlinie des Gasgriffs kann die Gasannahme des Motorrads beeinflusst werden. Beispielsweise kann ein größerer Weg am Gasgriff für die gleiche Gasannahme erforderlich werden.

Ferner kann ein stabilisierender Bremseingriff in Abhängigkeit von den aktuellen Windverhältnissen angesteuert werden. Wenn das Motorrad durch den aktuellen Windverhältnisse in Schwingung gerät, kann das Motorrad durch einen Bremseingriff insbesondere am Hinterrad des Motorrads stabilisiert werden. Durch den Bremseingriff kann ein Aufschaukeln unterbunden werden.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das dazu ausgebildet ist, um die Schritte einer Variante des hier vorgestellten Verfahrens in entsprechenden Einrichtungen durchzuführen, anzusteuern bzw. umzusetzen.

Das Steuergerät kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale des Steuergeräts und des Verfahrens in geeigneter Weise kombiniert, angepasst oder ausgetauscht werden können, um zu weiteren Ausführungsformen der Erfindung zu gelangen.

### Kurze Beschreibung der Zeichnung

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Motorrads mit einem Steuergerät gemäß einem Ausführungsbeispiel;
Fig. 2 zeigt eine Darstellung von Messwerten bei ruhigen Windverhältnissen;
Fig. 3 zeigt eine Darstellung von Messwerten bei böigen Windverhältnissen; und
Fig. 4 zeigt eine Kennlinie zum Einstellen zumindest eines Regelparameters gemäß einem Ausführungsbeispiel.

Die Figuren sind lediglich schematisch und nicht maßstabsgetreu. Gleiche Bezugszeichen bezeichnen gleiche oder gleichwirkende Merkmale.

### Ausführungsformen der Erfindung

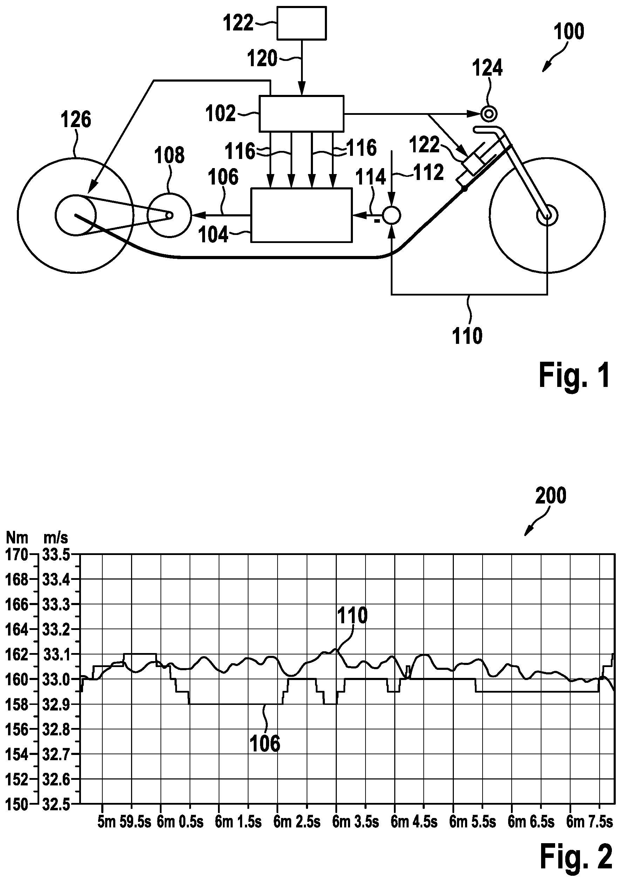

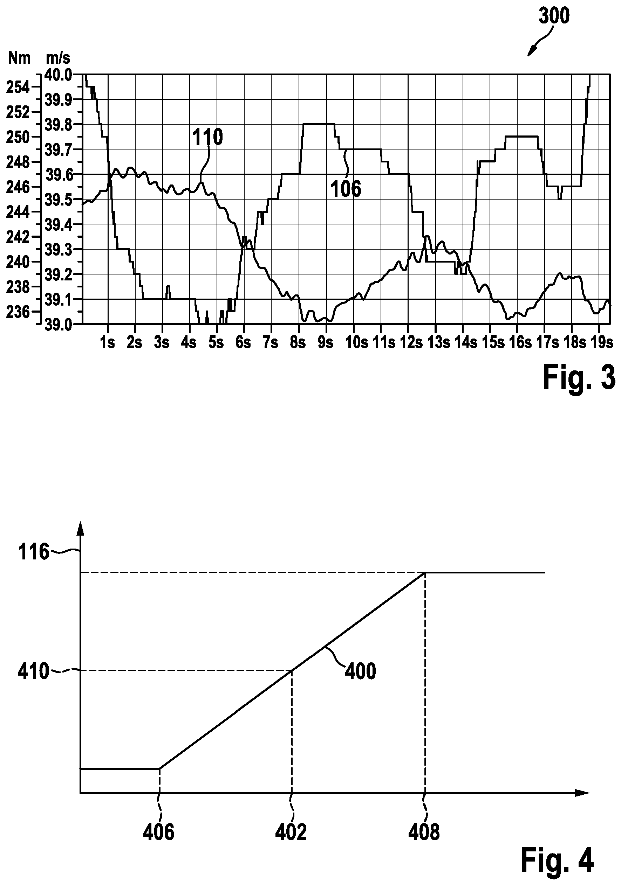

Fig. 1 zeigt eine Darstellung eines Motorrads 100 mit einem Steuergerät 102 gemäß einem Ausführungsbeispiel. Fign. 2 und 3 zeigen am Motorrad 100 erfasste Messwerte bei unterschiedlichen Windverhältnissen. Das Motorrad 100 weist einen Längsgeschwindigkeitsregler 104 auf. Der Längsgeschwindigkeitsregler 104 ist aktiviert und regelt eine Drehmomentanforderung 106 an einen Antrieb 108 des Motorrads 100, um eine Geschwindigkeit 110 des Motorrads 100 im Wesentlichen auf einer eingestellten Sollgeschwindigkeit 112 zu halten.

In Fig. 2 sind Verläufe der Drehmomentanforderung 106 und der Geschwindigkeit 110 bei ruhigen Windverhältnissen 200 dargestellt. In Fig. 3 sind Verläufe der Drehmomentanforderung 106 und der Geschwindigkeit 110 bei böigen Windverhältnissen 300 dargestellt.

Der Längsgeschwindigkeitsregler 106 erhöht oder reduziert die Drehmomentanforderung 108 in Abhängigkeit von einer Abweichung 114 der Geschwindigkeit 110 von der Sollgeschwindigkeit 112. Wie der Längsgeschwindigkeitsregler 104 die Drehmomentanforderung 106 verändert ist abhängig von Regelparametern 116 des Längsgeschwindigkeitsreglers 104.

Bei ruhigen Windverhältnissen 200 kann der Längsgeschwindigkeitsregler 104 die Drehmomentanforderung 106 mit geringen Abweichungen näherungsweise konstant halten, da die Geschwindigkeit 110 mit einer Frequenz von näherungsweise 1 Hz und einer Amplitude von meist unter 0,1 m/s um die Sollgeschwindigkeit 112 schwingt. Die Regelparameter 116 sind hier passend zu den ruhigen Windverhältnissen 200 eingestellt.

Böige Windverhältnisse 300 beeinflussen die Geschwindigkeit 110 maßgeblich.

Die Geschwindigkeit 110 schwankt durch die Böen näherungsweise um 0,75 m/s, was etwa 3 km/h entspricht. Diese Geschwindigkeitsänderung kann der Fahrer des Motorrads 100 deutlich spüren. In Fig. 3 ist dargestellt, wie sich der Längsgeschwindigkeitsregler 104 ohne Änderung der Regelparameter 116 bei böigen Windverhältnissen 300 verhält. Der Längsgeschwindigkeitsregler 104 reagiert zu spät auf das Absinken der Geschwindigkeit 110. Um die bereits stark gesunkene Geschwindigkeit 110 wieder anzuheben, erhöht der Längsgeschwindigkeitsregler 104 die Drehmomentanforderung 106 stark. Dadurch schwingt sich die Geschwindigkeit 110 auf und schwingt mit etwa 2 Hz.

Das Steuergerät 102 ist dazu ausgebildet, zumindest einen der Regelparameter 116 in Abhängigkeit von den aktuellen Windverhältnissen 200, 300 einzustellen. Wenn die böigen Windverhältnisse 300 erkannt werden, wird das Regelverhalten des Längsgeschwindigkeitsreglers 104 durch eine Änderung zumindest eines der Regelparameter 116 weniger aggressiv eingestellt. Dadurch wird die Tendenz zum Aufschwingen unterdrückt und es ergibt sich ein verbessertes Fahrgefühl.

Die Windverhältnisse 200, 300 werden durch eine Auswertung von eine Bewegung des Motorrads 100 abbildenden Bewegungsinformationen 120 des Motorrads 100 und durch eine Auswertung einer Regelgröße 106 des Längsgeschwindigkeitsreglers 104 erkannt. Die Bewegungsinformationen 120 bilden dabei auch die Geschwindigkeit 110 ab. Die Bewegungsinformationen 120 werden von Sensoren 122 des Motorrads 100 eingelesen.

Die böigen Windverhältnisse 300 werden erkannt, wenn die Bewegungsinformationen 120 und die Drehmomentanforderung 106 das Schwingen des Längsgeschwindigkeitsreglers 104 anzeigen.

In einem Ausführungsbeispiel werden die böigen Windverhältnisse 300 erkannt, wenn eine Schwingungsfrequenz des Schwingens in einen vorbestimmten Frequenzbereich ist.

In einem Ausführungsbeispiel wird durch das Steuergerät 102 eine Kennlinie eines Lenkungsdämpfers 122 des Motorrads 100 in Abhängigkeit von den aktuellen Windverhältnissen 200, 300 eingestellt. Insbesondere wird die Dämpfung des Lenkungsdämpfers 122 erhöht, wenn böige Windverhältnisse 300 erkannt werden. Durch die erhöhte Dämpfung können seitliche Schwingungen des Motorrads 100 gedämpft werden.

In einem Ausführungsbeispiel wird durch das Steuergerät 102 eine Kennlinie eines Gasgriffs 124 des Motorrads 100 in Abhängigkeit von den aktuellen Windverhältnissen 200, 300 eingestellt. Insbesondere wird eine Empfindlichkeit des Gasgriffs 124 verringert, wenn die böigen Windverhältnisse 300 erkannt werden.

In einem Ausführungsbeispiel wird durch das Steuergerät 102 ein stabilisierender Bremseingriff in Abhängigkeit von den aktuellen Windverhältnissen 200, 300 angesteuert. Insbesondere wird ein Hinterrad 126 des Motorrads 100 gebremst, wenn die böigen Windverhältnisse 300 erkannt werden.

In einem Ausführungsbeispiel werden die Windverhältnisse 200, 300 mit zumindest zwei hinterlegten Windmustern verglichen, um einen Typ der Windverhältnisse 200, 300 zu erkennen, wobei den hinterlegten Windmustern je ein Wert für den zumindest einen Regelparameter 116 zugeordnet ist und der Regelparameter 116 entsprechend dem erkannten Typ eingestellt wird.

Fig. 4 zeigt eine Kennlinie 400 zum Einstellen zumindest eines Regelparameters 116 gemäß einem Ausführungsbeispiel. Hier werden Zwischentypen 402 der Windverhältnisse unterschieden, wenn die Windverhältnisse zwischen zwei hinterlegten Windmustern 406, 408 liegen. Unter Verwendung der Kennlinie 400 wird dann ein Wert 410 für den zumindest einen Regelparameter 116 zwischen den zu den Windmustern 406, 408 hinterlegten Werten interpoliert.

Mit anderen Worten wird eine Optimierung des Fahrzeuglängsreglers (VLC) durch eine Erkennung von Windverhältnissen vorgestellt. Insbesondere wird ein Längsschwingen eines Motorrads mit unterschiedlichen Frequenzen aufgrund von Störungen erkannt.

Die adaptive Geschwindigkeitsregelung (ACC) ist seit einigen Jahren für Personenkraftwagen auf dem Markt erhältlich. Das gleiche System ist auch für Motorräder erhältlich. Das adaptive Geschwindigkeitsregelsystem verfügt über ein Untermodul, das die Längskraftregelung für die Beschleunigung und Verzögerung des adaptiven Geschwindigkeitsreglers verwaltet, den so genannten Vehicle Longitudinal Controller (VLC) oder Fahrzeuglängsregler. Der Fahrzeuglängsregler trägt dazu bei, die Dynamik des adaptiven Geschwindigkeitsreglers zu charakterisieren.

Die meisten Motorradfahrer sind sehr sensibel und spüren jede Bewegung ihres Fahrzeugs. Besonders beim Fahren mit dem adaptiven Tempomat spüren viele Fahrer sofort ein raues und ruckartiges Verhalten aufgrund von Beschleunigungen und Verzögerungen (hauptsächlich durch Druckaufbau in der Bremse). Aber auch beim Fahren mit konstanter Geschwindigkeit führt eine Störung von außen, z.B. Wind auf einer Brücke und hinter Bäumen (Wald) oder Kräfte durch eine veränderte Oberfläche des Motorrads (ausgefahrene Windschutzscheibe) zu einer spürbaren Bewegung und Ruckeln im Motorrad.

Konventionelle Fahrzeuglängsregler weisen keine unterschiedlichen Einstellungen für normale Bedingungen (kein Wind, keine Windschutzscheibe) und rauen Bedingungen (windig) oder einer erweiterten Windschutzscheibe auf. Dies ergibt sich aus der Tatsache, dass der Betrag der zu kompensierenden Beschleunigungskraft bei höheren Geschwindigkeiten und stärkerem Wind größer wird.

Wenn ein konstanter Wind entgegen einer Fahrtrichtung weht, ist das benötigte Drehmoment zum Kompensieren des Gegenwinds proportional zur Geschwindigkeit. Das gilt nur für konstante Windgeschwindigkeiten. Sobald der Wind ruckartig wird oder eine Windböe aufkommt, kann der benötigte Ausgleich ins Schwingen geraten.

Durch den hier vorgestellten Ansatz werden die Einstellungsmöglichkeiten des Fahrzeuglängsreglers bei Längsschwingungen erweitert.

Dazu werden raue Bedingungen anhand der Längs- und Querschwingungen des Motorrads erkannt, die durch eine Kombination von Signalen der Trägheitsmesseinheit (IMU) dargestellt werden.

Wenn der Kraftausgang des Fahrzeuglängsreglers konstant ist und das WSS-Geschwindigkeitssignal während der Fahrt mit der adaptiven Geschwindigkeitsregelung mit einer bestimmten Steigung abnimmt, kann eine raue Bedingung erkannt werden. Zur Redundanzprüfung kann geprüft werden, ob der Kraftausgang des Fahrzeuglängsreglers mit einer bestimmten Frequenz zu schwingen beginnt. Wenn die Kraftausgabe des Fahrzeuglängsreglers und die WSS-Geschwindigkeit schwanken, ist die Wahrscheinlichkeit, dass draußen raue Bedingungen herrschen, recht hoch.

Um den Fahrzeuglängsregler an diese Bedingungen anzupassen, sind bei dem hier vorgestellten Ansatz Parameter des Fahrzeuglängsregler veränderbar.

Diese realen Messbeispiele in den Fign. 2 und 3 zeigen die Ego-Geschwindigkeit des Motorrads in [m/s] und das angeforderte Motordrehmoment in [Nm]. In Fig. 2 besteht eine geringe Wahrscheinlichkeit für eine raue Bedingung. Die Ich-Geschwindigkeit schwingt mit einer Frequenz von etwa 1Hz und einer Amplitude von etwa 0,75m/s. Der Fahrzeuglängsregler zeigt ein gutes Reglerverhalten. In Fig. 3 besteht eine hohe Wahrscheinlichkeit für eine raue Bedingung. Die Ich-Geschwindigkeit schwingt mit einer Frequenz von etwa 2Hz als harmonische Komponente und einer Amplitude von etwa 0,75m/s. Der Fahrzeuglängsregler zeigt ein schlechtes Reglerverhalten.

Durch den hier vorgestellten Ansatz werden Steuergeräte verschiedener ECUs zustandsabhängig angepasst.

Insbesondere werden Fahrzeuglängsregler-Parameter zustandsabhängig angepasst. Um unterschiedliche Einstellungen des Fahrzeuglängsreglers zu realisieren, ist eine zusätzliche Kurve wie in Fig. 4 notwendig. Der Eingang dieser Kurve/Funktion ist die ermittelte Windbedingung (kein Wind/windig/rau). Der Ausgang der Kurve/Funktion ist die Einstellung der Fahrzeuglängsregler-Parameter. (Einstellung (1) bis Einstellung (n)). Die Anzahl der Einstellungen kann über Parameter gewählt werden.

Zustandsabhängig abstimmbare Parameter des Fahrzeuglängsreglers sind dabei beispielsweise eine P-Verstärkung (proportional), ein I-Anteil (integral), ein D-Anteil (derivativ) und ein S-Anteil (feedforward).

Auch ein Lenkungsdämpfer des Motorrads kann zustandsabhängig eingestellt werden. Wenn das Motorrad in Längsrichtung schwingt, ist die Wahrscheinlichkeit, dass es auch in Querrichtung unruhig wird, recht hoch. In diesem Fall kann die Kennlinie des Lenkungsdämpfers so eingestellt werden, dass eine stärkere Kraft aufrechterhalten wird, was zu einem stabileren Motorrad führt.

Ebenso kann eine Gasgriffcharakteristik zustandsabhängig eingestellt werden. Wenn das Motorrad nervös wird, kann ein unerfahrener Fahrer auf dem Motorrad steif werden. Der schwingende Körper des Fahrers kann sich auf den Lenker übertragen, was zu einer ruckartigen Gasgriffbedienung führt. Es kann beispielsweise eine zweite Gasgriffposition eingeführt werden. Sobald ein unruhiger Zustand erkannt wird, wird die progressivere Kurve verwendet.

Eine Fahrzeugstabilisierung durch Bremssteuerung kann zustandsabhängig umgesetzt werden. Wenn das Motorrad nervös wird, kann ein unerfahrener Fahrer durch das Wanken des Motorrads Angst bekommen. Dies kann durch eine Stabilisierung des Motorrads durch leichtes Betätigen der Hinterradbremse verringert werden. Dies kann automatisch von der ABS ECU durchgeführt werden, sobald eine solche Situation erkannt wird.

Durch den hier vorgestellten Ansatz werden windige Bedingungen sofort erkannt und die Einstellung wird auf komfortabel umgestellt. Dies führt zu einem stets angenehmen Fahrgefühl.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines Motorrads (100), wobei zumindest ein Regelparameter (116) eines Längsgeschwindigkeitsreglers (104) des Motorrads (100) in Abhängigkeit von aktuellen Windverhältnissen (200, 300) eingestellt wird,
**dadurch gekennzeichnet, dass** böige Windverhältnisse (300) erkannt werden, wenn eine eine Bewegung des Motorrads (100) abbildende Bewegungsinformation (120) des Motorrads (100) und eine Regelgröße des Längsgeschwindigkeitsreglers (104) ein Schwingen des Längsgeschwindigkeitsreglers (104) anzeigen.

2. Verfahren gemäß Anspruch 1, bei dem die böigen Windverhältnisse (300) erkannt werden, wenn eine Schwingungsfrequenz des Schwingens in einen vorbestimmten Frequenzbereich ist.

3. Verfahren gemäß einem der vorhergehenden Ansprüche, bei dem die Windverhältnisse (200, 300) mit zumindest zwei hinterlegten Windmustern (406, 408) verglichen werden, um einen Typ der Windverhältnisse (200, 300) zu erkennen, wobei den hinterlegten Windmustern (406, 408) je ein Wert (410) für den zumindest einen Regelparameter (116) zugeordnet ist und der Regelparameter (116) entsprechend dem erkannten Typ eingestellt wird.

4. Verfahren gemäß Anspruch 3, bei dem ein Zwischentyp (402) der Windverhältnisse (200, 300) erkannt wird, wenn die Windverhältnisse (200, 300) zwischen zwei hinterlegten Windmustern (406, 408) liegen, wobei der Wert (410) für den zumindest einen Regelparameter (116) zwischen den zu den Windmustern (406, 408) hinterlegten Werten interpoliert wird.

5. Verfahren gemäß einem der vorhergehenden Ansprüche, bei dem ferner eine Kennlinie eines Lenkungsdämpfers (122) des Motorrads (100) in Abhängigkeit von den aktuellen Windverhältnissen (200, 300) eingestellt wird.

6. Verfahren gemäß einem der vorhergehenden Ansprüche, bei dem ferner eine Kennlinie eines Gasgriffs (124) des Motorrads (100) in Abhängigkeit von den aktuellen Windverhältnissen (200, 300) eingestellt wird.

7. Verfahren gemäß einem der vorhergehenden Ansprüche, bei dem ferner ein stabilisierender Bremseingriff in Abhängigkeit von den aktuellen Windverhältnissen (200, 300) angesteuert wird.

8. Steuergerät (102), wobei das Steuergerät (102) dazu ausgebildet ist, das Verfahren gemäß einem der vorhergehenden Ansprüche in einem Motorrad mit Längsgeschwindigkeitsregler auszuführen.

9. Computerprogrammprodukt, das dazu eingerichtet ist, ein Steuergerät gemäß Anspruch 8 bei Ausführung des Computerprogrammprodukts dazu anzuleiten, das Verfahren gemäß einem der Ansprüche 1 bis 7 auszuführen.

10. Maschinenlesbares Speichermedium, auf dem das Computerprogrammprodukt gemäß Anspruch 9 gespeichert ist.

## Claims

1. Method for operating a motorcycle (100), wherein at least one control parameter (116) of a longitudinal speed controller (104) of the motorcycle (100) is set on the basis of current wind conditions (200, 300),
**characterized in that**
gusty wind conditions (300) are detected if movement information (120) relating to the motorcycle (100) and representing a movement of the motorcycle (100) and a control variable of the longitudinal speed controller (104) indicate an oscillation of the longitudinal speed controller (104).

2. Method according to Claim 1, in which the gusty wind conditions (300) are detected if an oscillation frequency of the oscillation is in a predetermined frequency range.

3. Method according to one of the preceding claims, in which the wind conditions (200, 300) are compared with at least two stored wind patterns (406, 408) in order to detect a type of wind conditions (200, 300), wherein the stored wind patterns (406, 408) are each assigned a value (410) for the at least one control parameter (116) and the control parameter (116) is set according to the detected type.

4. Method according to Claim 3, in which an intermediate type (402) of wind conditions (200, 300) is detected if the wind conditions (200, 300) are between two stored wind patterns (406, 408), wherein the value (410) for the at least one control parameter (116) is interpolated between the values stored for the wind patterns (406, 408).

5. Method according to one of the preceding claims, in which a characteristic curve of a steering damper (122) of the motorcycle (100) is also set on the basis of the current wind conditions (200, 300).

6. Method according to one of the preceding claims, in which a characteristic curve of a throttle grip (124) of the motorcycle (100) is also set on the basis of the current wind conditions (200, 300).

7. Method according to one of the preceding claims, in which a stabilizing brake intervention is also controlled on the basis of the current wind conditions (200, 300).

8. Control unit (102), wherein the control unit (102) is designed to carry out the method according to one of the preceding claims in a motorcycle with a longitudinal speed controller.

9. Computer program product which is configured to instruct a control unit according to Claim 8 to carry out the method according to one of Claims 1 to 7 when executing the computer program product.

10. Machine-readable storage medium on which the computer program product according to Claim 9 is stored.

## Revendications

1. Procédé de fonctionnement d'une motocyclette (100), dans lequel au moins un paramètre de régulation (116) d'un régulateur de vitesse longitudinale (104) de la motocyclette (100) est réglé en fonction de conditions de vent actuelles (200, 300),
**caractérisé en ce que**
des conditions de vent en rafale (300) sont identifiées lorsqu'une information de mouvement (120) de la motocyclette (100) représentant un mouvement de la motocyclette (100) et une mesure de régulation du régulateur de vitesse longitudinale (104) indiquent une oscillation du régulateur de vitesse longitudinale (104).

2. Procédé selon la revendication 1, dans lequel les conditions de vent en rafale sont identifiées (300) lorsqu'une fréquence d'oscillation se situe dans une plage de fréquences prédéterminée.

3. Procédé selon l'une des revendications précédentes, dans lequel les conditions de vent (200, 300) sont comparées à au moins deux types de vent enregistrés (406, 408) pour identifier un type de vent (200, 300), une valeur (410) dudit au moins un paramètre de régulation (116) étant respectivement associée aux modèles de vent enregistrés (406, 408), et le paramètre de régulation (116) étant réglé en fonction du type identifié.

4. Procédé selon la revendication 3, dans lequel un type intermédiaire (402) des conditions de vent (200, 300) est identifié lorsque les conditions de vent (200, 300) se situent entre deux types de vent enregistrés (406, 408), la valeur (410) dudit au moins un paramètre de régulation (116) étant interpolée entre les valeurs enregistrées pour les modèles de vent (406, 408).

5. Procédé selon l'une des revendications précédentes, dans lequel une courbe caractéristique d'un amortisseur de direction (122) de la motocyclette (100) est également réglée en fonction des conditions de vent actuelles (200, 300).

6. Procédé selon l'une des revendications précédentes, dans lequel une courbe caractéristique d'une poignée des gaz (124) de la motocyclette (100) est également réglée en fonction des conditions de vent actuelles (200, 300).

7. Procédé selon l'une des revendications précédentes, dans lequel une intervention de freinage stabilisatrice est également déclenchée en fonction des conditions de vent actuelles (200, 300).

8. Appareil de commande (102), l'appareil de commande (102) étant conçu pour mettre en œuvre le procédé selon l'une des revendications précédentes dans une motocyclette comprenant un régulateur de vitesse longitudinale.

9. Produit programme d'ordinateur, qui est conçu pour amener un appareil de commande selon la revendication 8 à mettre en œuvre le procédé selon l'une des revendications 1 à 7 lors de l'exécution du produit programme d'ordinateur.

10. Support de stockage lisible par machine sur lequel est stocké le produit programme d'ordinateur selon la revendication 9.
